# EUROPÄISCHE PATENTSCHRIFT

(11) **EP 2 182 331 B1**
(45) Veröffentlichungstag und Bekanntmachung des Hinweises auf die Patenterteilung: **19.08.2020**
(21) Anmeldenummer: 08168296.5
(22) Anmeldetag: 04.11.2008
(51) Int. Cl.: G01F 1/00, G01L 9/00, G01N 9/00, G08B 21/18

(54) **Auslagerung einer Komponente mit Auswirkung auf die Sicherheitsfunktion aus dem sicherheitsrelevanten Bereich**
Shifting of a component having effect on the safety function from the safety relevant zone
Déplacement d'une composante s'appliquant sur une fonction de sécurité au-delà de la partie du circuit concernant la sécurité.

(43) Veröffentlichungstag der Anmeldung: 05.05.2010
(73) Patentinhaber: VEGA Grieshaber KG, 77709 Wolfach (DE)
(72) Erfinder: Gaiser, Martin, 72275, Alpirsbach (DE); Haas, Jürgen, 77709, Oberwolfach (DE); Lienhard, Jürgen, 77716, Fischerbach (DE); Motzer, Jürgen, 77723, Gengenbach (DE)
(74) Vertreter: Maiwald Patent- und Rechtsanwaltsgesellschaft mbH

(56) Entgegenhaltungen:
- WO-A-00/03209
- WO-A-2004/104525
- GB-A- 2 251 506
- US-A- 4 906 977
- US-A1- 2007 273 508

## Beschreibung

### Gebiet der Erfindung

Die Erfindung betrifft die Füllstand-, Druck- und Dichtemessung. Insbesondere betrifft die Erfindung ein Elektronikmodul für die Füllstandmessung, die Druckmessung oder die Dichtemessung, ein Verfahren zur Messung und Bestimmung eines Füllstands, eines Drucks oder einer Dichte eines Mediums in einem Behälter, ein Feldgerät, ein Steuergerät und eine Anzeige- und Bedieneinheit.

### Technologischer Hintergrund

Ob eine Funktion einer technischen Einrichtung als sicherheitskritisch oder als nicht-sicherheitskritisch einzustufen ist, bemisst sich an der Sicherheitsanforderungsstufe, die diese Funktion erfüllen muss. Die Sicherheitsanforderungsstufe ist ein Begriff aus dem Gebiet der funktionalen Sicherheit und wird auch als Sicherheitsintegritätslevel (SIL) bezeichnet. Aus der angestrebten Sicherheitsanforderungsstufe ergibt sich das sicherheitsgerichtete Konstruktionsprinzip der Einrichtung, welches einzuhalten ist, damit das Risiko einer Fehlfunktion den gestellten Anforderungen genügt.

Ist eine Funktion als sicherheitskritisch eingestuft, bedeutet dies beispielsweise, dass diese Funktion den Anforderungen von SIL3 oder sogar SIL4 zu genügen hat. Ist eine Funktion als nicht-sicherheitskritisch eingestuft, bedeutet dies beispielsweise, dass sie keinen Anforderungen von SIL zu genügen hat.

Technische Einrichtungen im Bereich der Füllstandmessung, Druckmessung oder Dichtemessung, die eine Sicherheitsfunktion (z. B. im Sinne von SIL) ausführen, bestehen intern häufig aus zwei Bereichen. Zum einen handelt es sich hierbei um den sicherheitskritischen oder sicherheitsrelevanten Bereich, der für die Sicherheitsfunktion zuständig ist. Zum anderen handelt es sich um den nicht-sicherheitskritischen Bereich, der die Sicherheitsfunktion nicht beeinflusst.

Alle Hardware- und Softwarekomponenten, die zum sicherheitsrelevanten Bereich eines Geräts zählen, erfordern je nach Sicherheitsstufe ein hohes Maß an Aufwand nicht nur während der Entwicklung des Geräts, sondern über den gesamten Lebenszyklus der Einrichtung. Software- und/oder Hardwarekomponenten, die im Gegensatz dazu im nicht-sicherheitsrelevanten Bereich liegen, sind meist viel einfacher und kostengünstiger zu entwickeln und zu warten.

Komponenten, die einen direkten Einfluss auf die Sicherheitsfunktion besitzen, werden üblicherweise bereits in der Planungsphase des Geräts dem sicherheitsrelevanten Bereich zugeordnet, damit diese nach den Anforderungen der Sicherheitsfunktion entwickelt werden. Dies ist nicht in allen Fällen zwingend erforderlich und führt in diesen Fällen zu unnötig hohem Aufwand und Kosten.

Aus der WO 2004/104525 A ist eine Alarm-Kontrolleinheit mit einer Alarm-Kontrollschaltung bekannt, die gemäß einer Füllstandhöhe in einem Tank unterschiedlich hohe Spannung für eine Sendeeinheit bereitstellt. US 2007/273508 offenbart ein Elektronikmodul gemäß der Präambel des Anspruchs 1.

### Zusammenfassung der Erfindung

Es ist eine Aufgabe der Erfindung, ein verbessertes Elektronikmodul für die Füllstandmessung, die Druckmessung und/oder die Dichtemessung bereitzustellen. Es sind ein Elektronikmodul für die Füllstandmessung, die Druckmessung oder die Dichtemessung, ein Feldgerät mit einem Elektronikmodul, ein Steuergerät mit einem Elektronikmodul, eine Anzeige- und Bedieneinheit mit einem Elektronikmodul sowie ein Verfahren zur Messung und Bestimmung eines Füllstands, eines Drucks oder einer Dichte eines Mediums in einem Behälter gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen das Elektronikmodul, das Feldgerät, das Steuergerät, die Anzeige- und Bedieneinheit und das Verfahren. In anderen Worten lassen sich die im Folgenden im Hinblick auf das Elektronikmodul genannten Merkmale auch in dem Feldgerät, dem Steuergerät, der Anzeige- und Bedieneinheit oder dem Verfahren implementieren, und umgekehrt.

Gemäß einem Aspekt der Erfindung ist ein Elektronikmodul für die Füllstandmessung, die Druckmessung und/oder die Dichtemessung angegeben, welches einen ersten Bereich und einen zweiten Bereich aufweist. Der erste Bereich ist als sicherheitskritisch eingestuft und der zweite Bereich ist als nicht-sicherheitskritisch eingestuft. Das Elektronikmodul ist zum Ausführen einer Sicherheitsfunktion ausgeführt, wobei der zweite Bereich unter Anderem zur Ausführung einer ausgelagerten Funktion des Elektronikmoduls ausgeführt ist, die als sicherheitskritisch eingestuft ist und sich auf die Sicherheitsfunktion auswirkt.

In anderen Worten ist eine Komponente oder Funktion, die normalerweise dem sicherheitsrelevanten Bereich zugeordnet werden müsste, aus diesem sicherheitskritischen Bereich in den nicht-sicherheitskritischen Bereich ausgelagert. Dadurch kann der Aufwand hinsichtlich Entwicklung und Integration dieser Komponente verringert werden.

Gemäß der Erfindung ist der erste, als sicherheitskritisch eingestufte Bereich unter Anderem zur Ausführung einer Diagnosefunktion ausgeführt, mit welcher die Ausführung der ausgelagerten Funktion im zweiten Bereich überprüfbar ist.

Eine Komponente, die sich funktional auf die Sicherheitsfunktion auswirkt, wird also in den nicht-sicherheitsrelevanten Bereich ausgelagert. Dies kann dazu führen, dass diese Komponente die hohen Qualitätsansprüche der Sicherheitsfunktion nicht länger erfüllen kann. Durch die Implementierung der Diagnosemaßnahme (Diagnosefunktion) im sicherheitsrelevanten Bereich kann allerdings sichergestellt werden, dass alle Fehler der nun ausgelagerten Komponenten erkannt werden, insbesondere wenn sich diese negativ auf die Sicherheitsfunktion auswirken könnten.

Gemäß einem weiteren Ausführungsbeispiel der Erfindung ist die Diagnosefunktion zur Erkennung aller bekannten Fehler der ausgelagerten Funktion ausgeführt.

Gemäß einem weiteren Ausführungsbeispiel der Erfindung ist der erste, als sicherheitskritisch eingestufte Bereich weiterhin zur Ausführung einer geeigneten Maßnahme ausgeführt, die dann ausgeführt wird, wenn die zuvor genannte Diagnosefunktion einen Fehler in der ausgelagerten Funktion aufdeckt. Die Diagnosekomponente führt beispielsweise keine Aktionen aus, die über den Rahmen der Diagnose hinausgehen. Dies bleibt anderen Komponenten vorenthalten, die im ersten Bereich liegen müssen

Durch die Ausführung der geeigneten Maßnahme kann der Fehler behoben werden und ggf. ist es auch möglich, die Fehlerursache zu beseitigen. Ist beides nicht möglich, wechselt das System in einen vorher definierten sicheren Zustand. Dieser Zustand wird dann beibehalten solange ein Fehlverhalten der ausgelagerten Funktion diagnostiziert wird.

Somit kann während dem sicherheitskritischen Betrieb des Elektronikmoduls auch die Wirksamkeit der Diagnose periodisch nachgewiesen werden. Beispielsweise kann kurzzeitig eine bestimmte Fehlfunktion simuliert werden, wodurch die Diagnosemaßnahme in ihrer Wirksamkeit überprüft werden kann.
Somit kann ausgeschlossen werden, dass ein Fehler in der ausgelagerten Funktion (Komponente) die Qualität der Sicherheitsfunktion verringert.

Gemäß einem weiteren Ausführungsbeispiel der Erfindung ist die ausgelagerte Funktion zur Durchführung einer kontinuierlichen Regelung einer internen Größe des Elektronikmoduls ausgeführt. Hierbei handelt es sich beispielsweise um die Regelung einer bestimmten Frequenz eines Füllstandsensors. Die Genauigkeit dieser Frequenz übt einen Einfluss auf die Genauigkeit der Messung aus. Die Regelung kann hierbei sowohl ein Regelungsprogramm sowie eine Schaltung, beispielsweise in Form eines Mikrocontrollers, umfassen.
Gemäß einem weiteren Ausführungsbeispiel der Erfindung ist die ausgelagerte Funktion zur Einstellung einer Stromausgabe einer 4...20mA Zweileiterschleife ausgeführt. Die eingestellte Stromausgabe korrespondiert hierbei mit dem gemessenen Messwert und dient der Messwertübertragung.
Gemäß einem weiteren Ausführungsbeispiel der Erfindung handelt es sich bei der ausgelagerten Funktion um eine Messwertbestimmung auf Basis von Sensormessdaten, um die Ableitung von weiteren Messwerten auf Basis bereits bestimmter Messwerte oder um die Ausgabe von Messwerten.

Gemäß einem weiteren Ausführungsbeispiel der Erfindung ist das Elektronikmodul in einem Steuergerät für das Füllstandmessgerät, das Druckmessgerät oder das Dichtemessgerät integriert.

Gemäß einem weiteren Ausführungsbeispiel der Erfindung ist das Elektronikmodul in einer Anzeige- und Bedieneinheit für das Füllstandmessgerät, das Druckmessgerät oder das Dichtemessgerät integriert.

Gemäß einem weiteren Ausführungsbeispiel der Erfindung ist das Elektronikmodul in einer Anzeige- und Bedieneinheit für das Füllstandmessgerät, das Druckmessgerät oder das Dichtemessgerät integriert.

Gemäß einem weiteren Aspekt der Erfindung ist ein Feldgerät mit einem oben beschriebenen Elektronikmodul angegeben.

Gemäß einem weiteren Aspekt der Erfindung ist ein Steuergerät mit einem oben beschriebenen Elektronikmodul angegeben.

Gemäß einem weiteren Aspekt der Erfindung ist eine Anzeige- und Bedieneinheit mit einem oben beschriebenen Elektronikmodul angegeben.

Gemäß einem weiteren Aspekt der Erfindung ist ein Verfahren zur Messung und Bestimmung eines Füllstands, eines Drucks oder einer Dichte eines Mediums in einem Behälter durch ein Feldgerät angegeben, bei dem eine Sicherheitsfunktion in einem ersten Bereich eines Elektronikmoduls ausgeführt wird, wobei der erste Bereich als sicherheitskritisch eingestuft ist. Weiterhin wird eine ausgelagerte Funktion des Elektronikmoduls in einem zweiten Bereich des Elektronikmoduls ausgeführt, wobei der zweite Bereich als nicht-sicherheitskritisch eingestuft ist. Bei dieser ausgelagerten Funktion handelt es sich um eine als sicherheitskritisch eingestufte Funktion, die sich auf die Sicherheitsfunktion des Feldgeräts auswirkt.

Gemäß der Erfindung weist das Verfahren weiterhin die folgenden Schritte auf: Ausführung einer Diagnosefunktion in dem ersten Bereich, mit welcher die Ausführung der ausgelagerten Funktion im zweiten Bereich überprüfbar ist; Ausführung einer geeigneten Maßnahme bei Erkennen eines Fehlers der ausgelagerten Funktion; periodisches Überprüfen einer Wirksamkeit der Diagnosefunktion.

Natürlich kann die Wirksamkeit der Diagnosefunktion auch in unregelmäßigen Abständen überprüft werden, beispielsweise in Abhängigkeit von der Häufigkeit, mit welcher die einzelnen Füllstands-, Druck- oder Dichtemessungen durchgeführt werden. Da die Diagnosemaßnahme eine sicherheitskritische Funktion erfüllt soll diese eine aufgedecktes Fehlverhalten an eine höhere Instanz weiterleiten. Diese höhere Instanz (meist eine spezielle Komponente im ersten also sicherheitskritischen Bereich) führt dann eine entsprechende geeignete Maßnahme aus.

Ein Vorteil der Erfindung ist darin zu sehen, dass die Realisierung der Diagnosemaßnahmen im sicherheitsrelevanten Bereich zusammen mit der Implementierung der Komponente außerhalb des sicherheitsrelevanten Bereichs einfacher und kostengünstiger sein kann, als eine komplette Implementierung der entsprechenden Komponente im sicherheitsrelevanten Bereich.

Durch die Auslagerung komplexer Funktionen, die direkt zur Sicherheitsfunktion beitragen, aus dem sicherheitsrelevanten Bereich wird die Qualität der Sicherheitsfunktion nicht verringert, da die ausgelagerten Funktionen über die Diagnosefunktion überprüft werden.

Im Folgenden werden mit Verweis auf die Figuren Ausführungsbeispiele der Erfindung beschrieben.

### Kurze Beschreibung der Figuren

Fig. 1 zeigt eine Darstellung eines Elektronikmoduls gemäß einem Ausführungsbeispiel der Erfindung.
Fig. 2 zeigt eine Darstellung eines Messsystems gemäß einem Ausführungsbeispiel der Erfindung.
Fig. 3 zeigt eine Anzeige- und Bedieneinheit, ein Füllstandmessgerät, ein Dichtemessgerät und ein Druckmessgerät gemäß einem Ausführungsbeispiel der Erfindung.
Fig. 4 zeigt ein Flussdiagramm eines Verfahrens gemäß einem Ausführungsbeispiel der Erfindung.
Fig. 5 zeigt eine Darstellung eines Elektronikmoduls gemäß einem weiteren Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

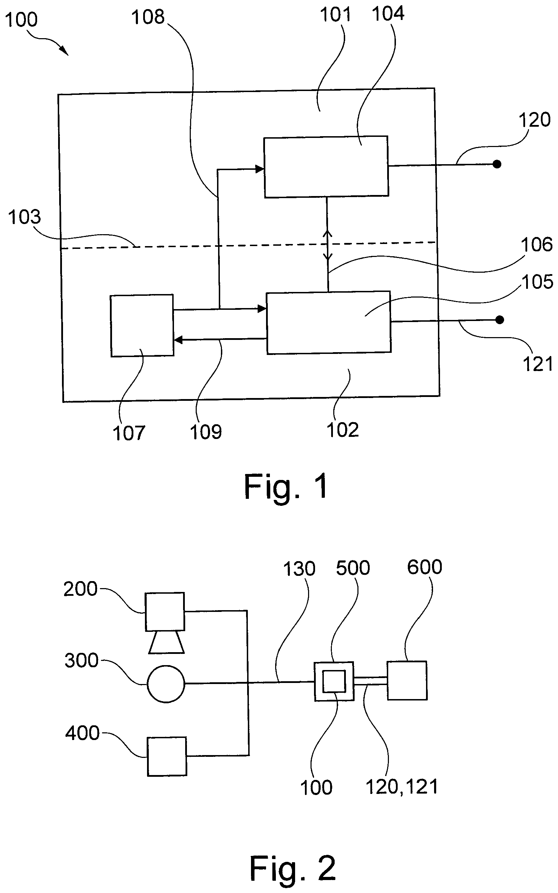

Fig. 1 zeigt ein Elektronikmodul 100, welches einen ersten Bereich 101 und einen zweiten Bereich 102 aufweist. Der erste Bereich 101 ist als sicherheitskritisch eingestuft und ist (symbolisiert durch die gestrichelte Linie 103) von dem zweiten Bereich 102, der als nicht-sicherheitskritisch eingestuft ist, getrennt.

Beispielsweise weist der sicherheitskritische Bereich ein erstes Subsystem 104, beispielsweise in Form eines ersten Prozessors, und der zweite Bereich 102 ein zweites Subsystem 105, beispielsweise in Form eines zweiten Prozessors, auf.

Weiterhin ist eine Kommunikationsleitungen 106 vorgesehen, über welche die beiden Subsysteme 104, 105 miteinander kommunizieren können. Der Datenaustausch kann hier beispielsweise auch nur unidirektional vorgesehen sein, nämlich vom sicherheitskritischen Bereich 101 in den sicherheitsunkritischen Bereich 102.

Es ist zu beachten, dass die beiden Bereiche 101, 102 sowohl als ein Modul 100 als auch in Form von zwei voneinander getrennten Teilmodulen (nicht dargestellt in Fig. 1) ausgeführt sein können.

Weiterhin weist jeder der beiden Bereiche 101, 102 eine Schnittstelle 120 bzw. 121 auf, mit welcher er an die Außenwelt angeschlossen werden kann.

Das Elektronikmodul 100 besitzt also zwei Bereiche, nämlich den sicherheitsrelevanten Bereich 101, der für die Sicherheitsfunktion zuständig ist, und den nicht-sicherheitsrelevanten Bereich 102, der die Sicherheitsfunktion nicht beeinflusst. Eine mögliche , die Sicherheitsfunktion beeinflussende Funktion besteht darin, dass in dem Subsystem 107 im nicht-sicherheitsrelevanten Bereich 102 des Elektronikmoduls eine interne Größe) erzeugt wird, die über das Subsystem 105 mittels der Verbindung 109 (Stellgrößen) ständig auf einem vorgegebenen Wert gehalten wird. Im Falle eines Elektronikmoduls für einen Füllstandsensor kann es sich hierbei beispielsweise um eine bestimmte Frequenz eines Signals handeln. Hierfür ist eine kontinuierliche Regelung notwendig.

Über die Verbindung 108 gelangt die geregelte Größe zum Subsystem 104 im sicherheitskritischen Bereich und gleichermaßen zum Subsystem 105 im nicht-sicherheitsrelevanten Bereich.

Die Sicherheitsfunktion benötigt diese interne Größe jedoch nur periodisch und immer nur für kurze Zeit.

Eine Diagnosemaßnahme im sicherheitsrelevanten Bereich prüft nun, dass die geregelte interne Größe, während diese zur Realisierung der Sicherheitsfunktion benötigt wird, in einem tolerierbaren Wertebereich liegt.

Zudem wird die Diagnosemaßnahme periodisch während dem sicherheitsgerichteten Betrieb des Gerätes geprüft, um die Wirksamkeit der Diagnosemaßnahme zu garantieren. Für diesen Zweck wird die interne Größe bewusst verfälscht und geprüft, ob die Diagnosemaßnahme korrekt auf diesen simulierten Fehler reagiert. Diese Online-Prüfung der Diagnosemaßnahme wird beispielsweise immer dann durchgeführt, wenn die Sicherheitsfunktion die zu regelnde interne Größe nicht benötigt. Auch kann diese Prüfung lediglich einmal innerhalb der Diagnosedauer des Gerätes durchgeführt werden.

Die Regelung selbst wird also in den nicht-sicherheitsrelevanten Bereich ausgelagert, was den Aufwand für die Regelung reduziert und gegenüber einer Realisierung der Regelung im sicherheitsrelevanten Bereich zusätzliche Freiheitsgrade bietet.

Muss beispielsweise zur Durchführung einer Messung einerseits ein komplexes Signal erzeugt werden, ist aber andererseits mit relativ wenig Aufwand mittels einer Diagnosemaßnahme überprüfbar ob das Signal korrekt erzeugt wurde, so kann das gleiche Verfahren wie bei der Regelung der Frequenz verwenden, sofern durch eine Diagnosemaßnahme alle möglichen Fehlerfälle der Erzeugung des komplexen Signals aufgedeckt und beherrscht werden können. Ist dies gegeben können alle Komponenten, die zur Erzeugung des o.g. Signals benötigt werden, in den nicht sicherheitskritischen Bereich verlagert werden. Im Gegenzug dazu muss dann eine entsprechende Diagnosemaßnahme inklusive deren Funktionsprüfung zur Laufzeit im sicherheitskritischen Bereich implementiert werden.

Auch kann die Funktionsprüfung der Diagnosemaßnahme zur Laufzeit entfallen, wenn die Diagnosemaßnahme nicht als klassische Diagnosemaßnahme ausgeführt ist , also mit reduzierter Kritikalität. In diesem Fall wird die Diagnosemaßnahme als sicherheitsrelevant mit voller Kritikalität eingestuft. Da dann erhöhte Anforderungen an die Realisierung der Diagnosemaßnahme gestellt werden, ist das Risiko des Ausfalls der Diagnosemaßnahme soweit minimiert, dass die Funktionsprüfung der Diagnosemaßnahme zur Laufzeit nicht zwingend notwendig ist.

Das beschriebene Verfahren kann sowohl in einem Feldgerät umgesetzt werden, oder aber auch in einem Steuergerät für Feldgeräte oder einer Auswerte- und Bedieneinheit.

Fig. 2 zeigt ein Messsystem gemäß einem Ausführungsbeispiel der Erfindung, welches sowohl für die Füllstandmessung als auch für die Druck- und Dichtemessung einsetzbar ist. Das Messsystem weist einen oder mehrere Füllstandsensoren 200, einen oder mehrere Drucksensoren 300 und/oder einen oder mehrere Dichtemessgeräte 400 auf. Sämtliche Sensoren sind über einen Messbus 130 an das Steuergerät 500 angeschlossen. Das Steuergerät 500 ist wiederum über die Leitung 120 und/oder 121 an eine Auswerte- und Bedieneinheit 600 angeschlossen.

Im Ausführungsbeispiel der Fig. 2 ist das Elektronikmodul in dem Steuergerät 500 integriert.

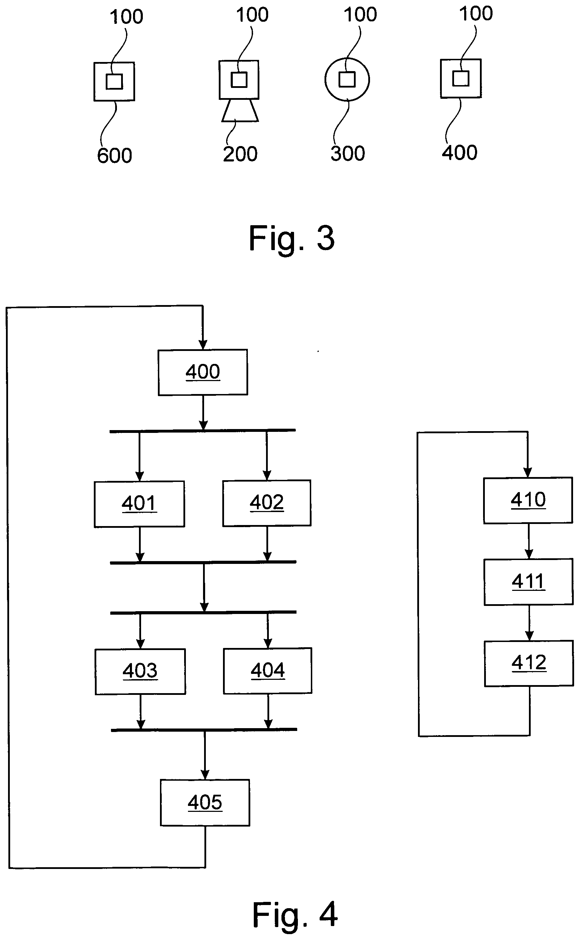

Fig. 3 zeigt Ausführungsbeispiele von Messsensoren sowie einer Auswerte- und Bedieneinheit 600, in welchen jeweils ein Elektronikmodul 100 integriert ist. Bei den Messsensoren handelt es sich um ein Füllstandmessgerät 200, ein Druckmessgerät 300 und ein Dichtemessgerät 400.

Die integrierten Elektronikmodule 100 können hierbei individuell auf die verschiedenen Geräte abgestimmt sein, sich also voneinander unterscheiden. Auch ist es möglich, dasselbe universell ausgeführte Elektronikmodul 100 in sämtliche Geräte zu integrieren.

Fig. 4 zeigt ein Flussdiagramm eines Verfahrens gemäß einem Ausführungsbeispiel der Erfindung. Die Schritt 400 bis 405 symbolisieren Aktionen, die durchzuführen sind um die Sicherheitsfunktion zu realisieren. Diese werden im sicherheitskritischen Bereich ausgeführt.

In den Schritten 410 bis 412 werden alle Aktionen durchgeführt um die interne Größe zu regeln. Diese werden im nicht-sicherheitskritischen Bereich ausgeführt. In Schritt 410 wird der Ist-Wert der zu regelnden Größe bestimmt, in Schritt 411 wird die Stellgröße durch den Regelalgorithmus bestimmt und in Schritt 412 wird schließlich die Stellgröße ausgegeben.

Die beiden Schleifen (die Schritte 400 bis 405 und die Schritte 410 bis 412) werden ständig parallel ausgeführt und werden nicht synchronisiert.

In Schritt 400 werden Aktionen ausgeführt, bevor die zu regelnde interne Größe benötigt wird.

In Schritt 401 werden Aktionen durchgeführt, welche die zu regelnde interne Größe verwenden. Schritt 402 wird zeitlich parallel zu Schritt 401 ausgeführt. In Schritt 402 werden Aktionen zur Überwachung der zu regelnden internen Größe durchgeführt um festzustellen, ob diese innerhalb eines definierten Wertebereiches liegt, der zur Realisierung der Sicherheitsfunktion eingehalten werden muss.

Schritt 403 wird ebenfalls parallel zu Schritt 404 ausgeführt. In Schritt 404 werden exakt die gleichen Aktionen wie in Schritt 402 ausgeführt (Überwachung der zu regelnden internen Größe). Schritt 403 verwendet im Gegensatz zu Schritt 401 aber nicht die interne zu regelnde Größe, sondern verfälscht diese absichtlich. Dies muss die Überwachung in Schritt 404 erkennen und anzeigen. Schritt 403 führt damit eine Online-Prüfung der Überwachung durch die gleichermaßen in den Schritten 402 und 404 ausgeführt wird.

In Schritt 405 wird die interne zu regelnde Größe ebenfalls nicht mehr benötigt. Hier wird das sicherheitsrelevante Messergebnis ermittelt und ausgegeben. Wurde jedoch durch Schritt 402 festgestellt, dass während Schritt 401 die zu regelnde interne Größe außerhalb des geforderten Wertebereiches lag, oder dass die Online-Prüfung der Überwachung fehlschlug, so wird in Schritt 405 kein neues Messergebnis ermittelt sondern eine geeignete Maßnahme für diesen Fehlerfall ausgeführt.
Die Schritte 403 und 404 müssen nicht in jedem Messzyklus ausgeführt werden. Es genügt wenn diese einmal innerhalb der Diagnosedauer des Systems ausgeführt werden.

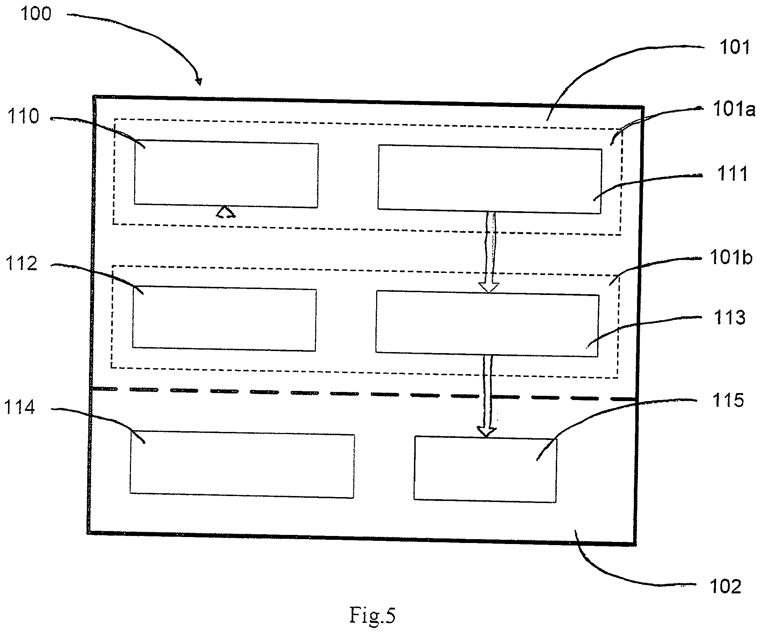

Fig. 5 zeigt eine Darstellung eines Elektronikmoduls 100 gemäß einem weiteren Ausführungsbeispiel der Erfindung. Das Elektronikmodul 100 umfasst einen ersten Bereich 101 und einen zweiten Bereich 102.

Der Bereich 101 ist sicherheitskritisch, der Bereich 102 ist nicht-sicherheitskritisch. Der Bereich 101 ist zur Verdeutlichung nochmals unterteilt in die Bereiche 101a und 101b. Der Bereich 101a besitzt die höchste Kritikalität des Systems und fordert damit den höchsten Entwicklungsaufwand. Der Bereich 101b besitzt eine reduzierte Kritikalität gegenüber 101a und fordert somit etwas weniger Entwicklungsaufwand. Der Bereich 102 besitzt keine Kritikalität und fordert somit einen weitaus geringeren Entwicklungsaufwand als die Bereiche 101a und 101b

Die Komponente 115 in dem nicht-sicherheitskritischen Bereich 102 hat Auswirkungen auf die Sicherheitsfunktion der Elektronikeinheit 100 und ist aus dem Bereich mit hoher Sicherheitsstufe 101 in den Bereich 102 verlagert. Um die Sicherheitsfunktion dadurch nicht negativ zu beeinflussen, werden zwei Maßnahmen getroffen:
Zum einen verfügt die Elektronikeinheit über eine spezielle Komponente 113, die die verlagerte Komponente 115 überwacht. An dieser Stelle sei angemerkt, dass die Bezeichnung "Komponente" im Kontext der Erfindung ein Computerprogramm und/oder eine Hardware betreffen kann.

Die Komponente 113 ist somit sicherheitsrelevant und muß zunächst dem Bereich 101 zugeordnet werden. Genauer betrachtet ist 113 eine klassische Diagnose-Komponente und darf somit in den Bereich 101b mit reduzierter Kritikalität zugeordnet werden.

Zweitens verfügt die Elektronikeinheit zusätzlich über eine Komponente 111, die während dem sicherheitsgerichteten Betrieb die Funktion der Komponente 113 prüft. Hierbei handelt es sich somit um eine Diagnose der Diagnose oder mit anderen Worten um eine Online-Prüfung der Diagnose-Komponente 113 bzw. der Diagnosemaßnahme. Damit diese Online-Prüfung sicherheitstechnisch einen Effekt hat, ist die zugehörige Komponente 111 im Bereich mit hoher Kritikalität 101a angesiedelt.

Auf diese Weise kann der Aufwand zur Realisierung der Komponente 115 stark reduziert werden. Allerdings müssen zusätzliche Komponenten 111 und 113 realisiert werden. Für den Fall, dass die Reduktion des Aufwands zur Realisierung der Komponente 115 eine Ersparnis mit sich bringt, welche den zusätzlichen Aufwand für die Realisierung der Komponenten 111 und 113 überwiegt, kann die Elektronikeinheit 100 kostengünstiger realisiert werden.

Der nicht-sicherheitskritische Bereich 102 weist weiterhin Komponenten ohne Auswirkung auf die Sicherheitsfunktion 114 auf. Der Bereich mit reduzierter Kritikalität 101b weist Komponenten zur Diagnose und/oder Überwachung 112 auf. Und der Bereich mit hoher Sicherheitsstufe 101a weist Komponenten zur Realisierung der Sicherheitsfunktion 110 auf, welche von den Komponenten 112 in Form einer Diagnosefunktion überwacht werden.

Ergänzend ist darauf hingewiesen, dass "umfassend" und "aufweisend" keine anderen Elemente oder Schritte ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Elektronikmodul für die Füllstandmessung, die Druckmessung oder die Dichtemessung, das Elektronikmodul (100) aufweisend:
einen ersten Bereich (101);
einen von dem ersten Bereich getrennten zweiten Bereich (102);
ein erstes Subsystem (104), in dem ersten Bereich (101), welches zur Realisierung einer Sicherheitsfunktion und zur Überwachung einer geregelten internen Größe eingerichtet ist;
ein zweites Subsystem (107), in dem zweiten Bereich (102), welches die geregelte interne Größe erzeugt; und
ein drittes Subsystem (105), in dem zweiten Bereich (102), welches zur Regelung der geregelten internen Größe eingerichtet ist,
wobei der erste Bereich (101) als sicherheitskritisch ausgeführt ist;
wobei die Überwachung mittels einer Diagnosefunktion erfolgt;
**dadurch gekennzeichnet, dass**
der zweite Bereich (102) als nicht-sicherheitskritisch ausgeführt ist.

2. Elektronikmodul nach Anspruch 1,
wobei die Diagnosefunktion zur Erkennung eines Fehlers der internen Größe ausgeführt ist.

3. Elektronikmodul nach Anspruch 1 oder 2,
wobei das Elektronikmodul (100) zur Ausführung einer geeigneten Maßnahme bei Erkennung eines Fehlers der internen Größe ausgeführt ist.

4. Elektronikmodul nach einem der Ansprüche 1 bis 3,
wobei das Elektronikmodul (100) zur periodischen Überprüfung einer Wirksamkeit der Diagnosefunktion ausgeführt ist.

5. Elektronikmodul nach einem der vorhergehenden Ansprüche,
wobei die interne Größe zur Ausführung einer Funktion vorgesehen ist, die ausgewählt ist aus der Gruppe bestehend aus Messwertbestimmung auf Basis von Sensormessdaten, Ableitung von weiteren Messwerten auf Basis bereits bestimmter Messwerte, Ausgabe von Messwerten, und Diagnose.

6. Elektronikmodul nach einem der vorhergehenden Ansprüche,
wobei das Elektronikmodul (100) in einem Füllstandmessgerät (200), einem Druckmessgerät (300) oder einem Dichtemessgerät (400) integriert ist.

7. Elektronikmodul nach einem der Ansprüche 1 bis 6,
wobei das Elektronikmodul (100) in einem Steuergerät (500) für das Füllstandmessgerät (200), das Druckmessgerät (300) oder das Dichtemessgerät (400) integriert ist.

8. Elektronikmodul nach einem der Ansprüche 1 bis 5,
wobei das Elektronikmodul (100) in einer Auswerte- und Bedieneinheit (600) für das Füllstandmessgerät (200), das Druckmessgerät (300) oder das Dichtemessgerät (400) integriert ist.

9. Feldgerät mit einem Elektronikmodul (100) nach einem der Ansprüche 1 bis 8.

10. Steuergerät mit einem Elektronikmodul (100) nach einem der Ansprüche 1 bis 8.

11. Auswerte- und Bedieneinheit mit einem Elektronikmodul (100) nach einem der Ansprüche 1 bis 8.

12. Verfahren zur Messung und Bestimmung eines Füllstands, eines Drucks oder einer Dichte eines Mediums in einem Behälter durch ein Feldgerät gemäß Anspruch 9, das Verfahren aufweisend die Schritte:
Ausführen einer Sicherheitsfunktion in dem ersten Bereich (101) des Elektronikmoduls;
Erzeugen einer geregelten internen Größe des Elektronikmoduls in dem zweiten Bereich (102) des Elektronikmoduls, die sich auf die Sicherheitsfunktion auswirkt;
Ausführen der Diagnosefunktion in dem ersten Bereich (101), mit welcher die Ausführung der internen Größe im zweiten Bereich überprüfbar ist;
wobei die Erzeugung der internen Größe aus dem sicherheitskritischen ersten Bereich in den nicht-sicherheitskritischen zweiten Bereich ausgelagert ist.

13. Verfahren nach Anspruch 12, weiterhin aufweisend die Schritte:
Ausführen einer geeigneten Maßnahme bei Erkennung eines Fehlers der internen Größe;
periodisches Überprüfen einer Wirksamkeit der Diagnosefunktion.

## Claims

1. An electronic module for level measurement, pressure measurement or density measurement, the electronic module (100) comprising:
a first section (101);
a second section (102) separated from the first section;
a first subsystem (104), in the first section (101), which is configured to implement a safety function and to monitor a controlled internal variable;
a second subsystem (107), in the second section (102), which generates the controlled internal variable; and
a third subsystem (105), in the second section (102), which is configured to control the controlled internal variable,
wherein the first section (101) is designed as safety critical;
wherein the monitoring is performed by means of a diagnostic function;
**characterised in that**
the second section (102) is designed as non-safety critical.

2. The electronic module according to claim 1,
wherein the diagnostic function is configured to detect an error of the internal variable.

3. The electronic module according to claim 1 or 2,
wherein the electronic module (100) is designed to execute an appropriate action upon detection of an error of the internal variable.

4. The electronic module according to any of claims 1 to 3,
wherein the electronic module (100) is configured for periodically checking an effectiveness of the diagnostic function.

5. The electronic module according to any of the preceding claims,
wherein the internal variable is provided for an execution of a function selected from a group consisting of determination of measured values on the basis of sensor measured data, derivation of further measured values on the basis of already determined measured values, output of measured values, and diagnosis.

6. The electronic module according to any of the preceding claims,
wherein the electronic module (100) is integrated in a fill level measuring device (200), a pressure measuring device (300), or a density measuring device (400).

7. The electronic module according to any of claims 1 to 6,
wherein the electronic module (100) is integrated in a control device (500) for the fill level measuring device (200), the pressure measuring device (300), or the density measuring device (400).

8. The electronic module according to any of claims 1 to 5,
wherein the electronic module (100) is integrated in an evaluation and operating unit (600) for the fill level measuring device (200), the pressure measuring device (300), or the density measuring device (400).

9. A field device with an electronic module (100) according to any of claims 1 to 8.

10. A control device comprising an electronic module (100) according to any of the claims 1 to 8.

11. An evaluation and adjustment unit comprising an electronic module (100) according to any of the claims 1 to 8.

12. A method for measuring and determining a filling level, a pressure, or a density of a medium in a container by a field device according to claim 9, the method comprising the steps:
performing a safety function in a first section (101) of the electronic module;
generating a controlled internal variable of the electronic module in the second section (102) of the electronic module, which variable affects the safety function;
executing the diagnostic function, by which the execution of the internal variable in the second section can be checked, in the first section (101);
wherein the generation of the internal variable is shifted from the safety-critical first section to the non-safety-critical second section.

13. The method according to claim 12, further comprising the steps:
performing an appropriate action upon detection of an error in the internal variable;
periodically checking an effectiveness of the diagnostic function.

## Revendications

1. Module électronique destiné à la mesure du niveau de remplissage, la mesure de pression ou la mesure de densité, le module électronique (100) comportant :
une première zone (101) ;
une deuxième zone (102) séparée de la première zone ;
un premier sous-système (104) dans la première zone (101), lequel est adapté pour la réalisation d'une fonction de sécurité et pour le contrôle d'une grandeur interne régulée ;
un deuxième sous-système (107) dans la deuxième zone (102), lequel génère la grandeur interne régulée ; et
un troisième sous-système (105) dans la deuxième zone (102), lequel est adapté pour la régulation de la grandeur interne régulée,
dans lequel la première zone (101) est configurée comme critique pour la sécurité ;
dans lequel le contrôle s'effectue au moyen d'une fonction de diagnostic ;
**caractérisé en ce que** la deuxième zone (102) est configurée comme non critique pour la sécurité.

2. Module électronique selon la revendication 1,
dans lequel la fonction de diagnostic est configurée pour détecter une erreur de la grandeur interne.

3. Module électronique selon la revendication 1 ou 2,
dans lequel le module électronique (100) est configuré pour exécuter une mesure adaptée lorsqu'une erreur de la grandeur interne est détectée.

4. Module électronique selon l'une des revendications 1 à 3,
dans lequel le module électronique (100) est configuré pour vérifier périodiquement une efficacité de la fonction de diagnostic.

5. Module électronique selon l'une des revendications précédentes,
dans lequel la grandeur interne est prévue pour la réalisation d'une fonction, sélectionnée parmi le groupe constitué par la détermination de valeur de mesure sur la base de données de mesure de capteur, la dérivation de valeurs de mesure supplémentaires sur la base de valeurs de mesure déjà déterminées, l'émission de valeurs de mesure, et le diagnostic.

6. Module électronique selon l'une des revendications précédentes,
dans lequel le module électronique (100) est intégré dans un appareil de mesure du niveau de remplissage (200), un appareil de mesure de pression (300) ou un appareil de mesure de densité (400).

7. Module électronique selon l'une des revendications 1 à 6,
dans lequel le module électronique (100) est intégré dans un appareil de pilotage (500) pour l'appareil de mesure du niveau de remplissage (200), l'appareil de mesure de pression (300) ou l'appareil de mesure de densité (400).

8. Module électronique selon l'une des revendications 1 à 5,
dans lequel le module électronique (100) est intégré dans une unité de contrôle et de commande (600) pour l'appareil de mesure du niveau de remplissage (200), l'appareil de mesure de pression (300) ou l'appareil de mesure de densité (400).

9. Appareil de terrain doté d'un module électronique (100) selon l'une des revendications 1 à 8.

10. Appareil de pilotage doté d'un module électronique (100) selon l'une des revendications 1 à 8.

11. Unité d'évaluation et de commande dotée d'un module électronique (100) selon l'une des revendications 1 à 8.

12. Procédé de mesure et de détermination d'un niveau de remplissage, d'une pression ou d'une densité d'un milieu dans un conteneur par un appareil de terrain selon la revendication 9, le procédé comportant les étapes de :
l'éxécution d'une fonction de sécurité dans la première zone (10) du module électronique ;
la génération d'une grandeur interne régulée du module électronique, laquelle a un effet sur la fonction de sécurité, dans la deuxième zone (102) du module électronique ;
l'éxécution de la fonction de diagnostic dans la première zone (10), avec laquelle la réalisation de la grandeur interne dans la deuxième zone peut être vérifiée ;
dans lequel la génération de la grandeur interne est déplacée hors de la première zone critique vers la deuxième zone non critique.

13. Procédé selon la revendication 12 comprenant en outre les étapes de :
l'éxécution d'une mesure adaptée lorsqu'une erreur de la grandeur interne est détectée ;
la vérification périodique d'une efficacité de la fonction de diagnostic.
